Europäisches Patentamt

European Patent Office

Office européen des brevets

(19)

(11) Veröffentlichungsnummer: **0 238 931**
**A2**

## (12) EUROPÄISCHE PATENTANMELDUNG

(21) Anmeldenummer: 87103395.7

(22) Anmeldetag: 10.03.87

(51) Int. Cl.⁴: **B60B 33/00**

(30) Priorität: 25.03.86 DE 8608186 U

(43) Veröffentlichungstag der Anmeldung:
30.09.87 Patentblatt 87/40

(84) Benannte Vertragsstaaten:
AT BE CH DE ES FR GB GR IT LI LU NL SE

(71) Anmelder: **Gross + Froehlich GmbH & Co.**
**Müllerstrasse 12**
**D-7000 Stuttgart 1(DE)**

(72) Erfinder: **Hezel, Bruno**
**Am Wildwechsel 2**
**D-7000 Stuttgart 80(DE)**

(74) Vertreter: **Patentanwälte Kohler - Schwindling**
**- Späth**
**Hohentwielstrasse 41**
**D-7000 Stuttgart 1(DE)**

(54) **Rolle, insbesondere für Büromöbel.**

(57) Eine insbesondere für Büromöbel bestimmte Rolle umfaßt einen aus Kunststoff bestehenden Tragkörper (1), einen im Tragkörper befestigten Achszapfen (2), mindestens ein auf dem Achszapfen gelagertes Rad (3), einen im Tragkörper drehbar gelagerten, metallischen Stift (5), der in einer zum Achszapfen (2) senkrechten Ebene zum Achszapfen versetzt angeordnet ist, und einen mit dem Stift (5) elektrisch leitend verbundenen Schleifkontakt, der einen über die zum Stift (5) senkrechte, das mindestens eine Rad (3) tangierende Ebene (20) überstehenden, federnden Abschnitt aufweist. Dieser federnde Abschnitt des Schleifkontaktes wird von einer zur Tangentialebene (20) im wesentlichen senkrecht stehenden Schraubenfeder (12) gebildet, die an ihrem freien Ende mit einem über die Tangentialebene (20) überstehenden Kontaktkörper (15) versehen ist.

EP 0 238 931 A2

Fig. 2

## Rolle, insbesondere für Büromöbel

Die Erfindung betrifft eine Rolle, insbesondere für Büromöbel, mit einem aus Kunststoff bestehenden Tragkörper, einem im Tragkörper befestigten Achszapfen, mindestens einem auf dem Achszapfen gelagerten Rad, einem im Tragkörper drehbar gelagerten, metallischen Stift, der in einer zum Achszapfen senkrechten Ebene zum Achszapfen versetzt angeordnet ist, und mit einem mit dem Stift elektrisch leitend verbundenen Schleifkontakt, der einen über die zum Stift senkrechte, das mindestens eine Rad tangierende Ebene überstehenden, federnden Abschnitt aufweist.

Eine solche Rolle ist aus dem DE-Gm 83 15 483 bekannt. Der Schleifkontakt dieser bekannten Rolle ist nach Art einer im wesentlichen zur Achse des Rades konzentrischen Kufe ausgebildet, die relativ großflächig am Fußboden anliegt. Diese Kufe ist mit einem stiftartigen Ansatz in einer Bohrung des Tragkörpers befestigt, beispielsweise durch Ankleben oder Einspritzen. Eine Befestigung durch Vernieten mit dem zur Befestigung der Rolle an einem Möbelstück, insbesondere am Fußkreuz eines Stuhles dienenden Stift, ist dann nicht möglich, wenn der Stift in dem Tragkörper drehbar gelagert ist, um ein Verschwenken der Rolle beim Bewegen des Büromöbels zu ermöglichen.

Der Nachteil der bekannten Rolle besteht darin, daß der als Schleifkontakt verwendete Bügel leicht verbiegen kann, weil er beim Verschwenken der Rolle seitlichen Kräften ausgesetzt ist, die insbesondere dann sehr beträchtlich werden können, wenn solche Rolle auf Teppichböden mit einer kräftigen Schlingen-oder Noppenstruktur verwendet werden. Dabei besteht auch die Gefahr, daß sich ein solcher Bügel verhakt. Weiterhin wird am Teppichboden ein erheblicher Abrieb erzeugt, der zu einem erhöhten Verschleiß eines Teppichbodens sowie auch zu einer störenden Flusenbildung führt. Ferner ist die Befestigung des Bügels mittels eines eingeklebten oder eingespritzten, zapfenartigen Fortsatzes nicht sehr sicher, weil sich ein solcher Fortsatz leicht lösen kann, worauf dann die Kufe aus dem Tragkörper ausziehbar ist und dann verloren gehen kann. Andererseits besteht bei einer starren Befestigung des Fortsatzes im Tragkörper die Gefahr, daß der Kontakt zu dem Stift der Zeit durch Abrieb verloren geht, sofern die Axialstellung des Stiftes im Tragkörper durch Lager sich nicht in Richtung auf den Ansatz des Schleifkontaktes verlagern kann. Ist dagegen der Stift lediglich an dem aus Kunststoff bestehenden Tragkörper abgestützt, so daß er sich im Laufe der Zeit tiefer in den Tragkörper einnisten kann, besteht die Gefahr, daß durch den Druck auf den Befestigungszapfen des Schleifkontaktes dieser Zapfen gelöst wird, mit der oben bereits erwähnten Folge.

Es ist weiterhin bekannt, Rollen mit einer zum Ableiten statischer Aufladungen ausreichenden Leitfähigkeit dadurch herzustellen, daß für den Tragkörper und die Räder ein ausreichend leitfähiger Kunststoff verwendet wird. Solche Kunststoffe enthalten zur Herstellung der Leitfähigkeit Ruß als Füllmaterial. Infolgedessen können solche Rollen nur in schwarzer Farbe hergestellt werden, was für die Anwendung bei modernen, hellen Möbeln als störend empfunden wird. Besonders nachteilig ist jedoch, daß solche Kunststoffe wegen des hohen Gehaltes an einem pulvrigen Füllmaterial nur eine begrenzte Festigkeit aufweisen, so daß aus solchen Kunststoffen hergestellte Rollen den an sie gestellten Forderungen bezüglich der Festigkeit nicht immer genügen.

Demgemäß liegt der Erfindung die Aufgabe zugrunde, eine Rolle der eingangs genannten Art so zu verbessern, daß keine Gefahr von Funktionsstörungen durch Verbiegen oder gar Verlust des Schleifkontaktes oder aber infolge einer unzureichenden Festigkeit besteht. Dabei sollen auch keine Beschränkungen bezüglich der Farbe des Kunststoffes bestehen und es soll auch kein übermäßiger Abrieb an Teppichen entstehen können.

Diese Aufgabe wird nach der Erfindung dadurch gelöst, daß der federnde Abschnitt des Schleifkontaktes von einer zur Tangentialebene im wesentlichen senkrecht stehenden Schraubenfeder gebildet wird, die an ihrem freien, Ende mit einem über die Tangentialebene überstehenden Kontaktkörper versehen ist.

Die Verwendung einer Schraubenfeder als federnder Abschnitt des Schleifkontaktes hat den Vorteil, daß keinerlei Vorzugsrichtung für die Auslenkung des Schleifkontaktes existiert, so daß irgendwelche Verbiegungen und bleibenden Deformationen durch Auslenken in einer ungünstigen Richtung nicht eintreten können. Hinzu kommt, daß eine Schraubenfeder ohne weiteres so dimensioniert werden kann, daß sie an die zu erwartenden Betriebsverhältnisse optimal angepaßt ist, d.h. bezüglich Auslenkbarkeit und Anpreßkraft. Weiterhin kann der am Ende der Feder angebrachte Kontaktkörper auf einfache Weise so gestaltet sein, daß er ebenfalls einerseits eine gute Kontaktgabe gewährleistet, andererseits aber ein Verhängen in einem Teppichboden oder die Erzeugung eines zusätzlichen Abriebes mit Sicherheit vermieden ist.

Bei einer bevorzugten Ausführungsform der Erfindung ist die Schraubenfeder so angeordnet, daß ihre Achse die Achse des das wenigstens eine Rad tragenden Achszapfens wenigstens annähernd - schneidet. In diesem Fall ist die Schraubenfeder längs der Achse angeordnet, um die die Rolle bei Bewegungen gegenüber dem Boden eine Schwenkbewegung ausführt. Dadurch werden die Bewegungen des Schleifkontaktes gegenüber dem Boden beim Fahren und Drehen eines mit einer solchen Rolle versehenen Büromöbels auf ein Minimum reduziert.

Die Schraubenfeder kann in einfacher Weise am Ende eines metallischen Leiterstückes angebracht sein, das am Tragkörper befestigt ist und einen zur Tangentialebene parallelen Abschnitt sowie einen Federarm aufweist, der in eine Aussparung des Tragkörpers eingreift und mit seinem Ende an einer Fläche des Stiftes anliegt. Die Verwendung einer Schraubenfeder als federnder Abschnitt des Schleifkontaktes macht es möglich, zur Befestigung dieser Feder ein metallisches Leiterstück zu verwenden, das seinerseits am Tragkörper starr und sicher befestigt ist, ohne daß dabei Rücksicht auf die Ausbildung der Schraubenfeder mit dem Kontaktkörper genommen werden müßte. Gleichzeitig ist es auch möglich, diesen Tragkörper mit einem Federarm zu versehen, der den Kontakt zu dem Stift herstellt, der zur Befestigung der Rolle an dem Büromöbel dient. Ein solcher Federarm gewährleistet unabhängig von irgendwelchen Abnutzungserscheinungen oder Lageänderungen einen einwandfreien elektrischen Kontakt zwischen dem Leiterstück und dem Stift und damit auch zwischen dem am Boden anliegenden Kontaktkörper und über den Stift mit dem Möbel. Dabei ist es für eine gute Kontaktgabe zwischen Federarm und Stift von besonderem Vorteil, wenn der Stift an seinem sich innerhalb des Tragkörpers befindenden Ende eine wenigstens annähernd kegelige Fläche aufweist und das Ende des Federarmes an dieser kegeligen Fläche anliegt.

Mit Schleifkontakten werden vorzugsweise solche Rollen versehen, die zwei zu beiden Seiten eines zentralen Abschnittes des Tragkörpers angeordnete Räder aufweisen. In diesem Fall wird die Schraubenfeder zweckmäßig zwischen den Rädern angeordnet. Gerade dann ermöglicht die Erfindung eine besonders einfache und sichere Ausbildung des Schleifkontaktes, die darin besteht, daß das Leiterstück an seinen Rändern an Seitenflächen des zentralen Abschnittes des Tragkörpers anliegende Lappen aufweist, die mit von den Achszapfen durchsetzten Bohrungen versehen sind. Es ist dann nicht mehr erforderlich, den Schleifkontakt durch besondere Maßnahmen und zusätzliche Mittel am Tragkörper der Rolle zu befestigen, sondern es wird der Schleifkontakt von dem den Tragkörper durchsetzenden Achszapfen gehalten und kann daher beim Einsetzen des Achszapfens in den Tragkörper ohne zusätzliche Maßnahmen montiert werden. Ein besonderer Vorteil besteht darin, daß bei dieser Ausführungsform der Erfindung der Schleifkontakt auch noch nachträglich bei Rollen mit gegebenem Aufbau angebracht werden kann, daß also auch vorhandene Rollen mit einem solchen Schleifkontakt nachgerüstet werden können. Im übrigen ist es auch für eine laufende Fertigung von Vorteil, wenn der Aufbau der Rolle davon unabhängig ist, ob die Rolle mit einem Schleifkontakt versehen werden soll oder nicht. Hierdurch wird eine erhöhte Flexibilität der Fertigung erreicht.

Der am Ende der Schraubenfeder angebrachte Kontaktkörper kann in einfacher Weise ein zur Schraubenfeder konzentrischer Knopf mit abgerundeter Stirnfläche sein. Ein solcher Knopf ist leicht herzustellen und an der Schraubenfeder zu befestigen. Beispielsweise kann der Knopf einen in das Innere der Schraubenfeder eingreifenden Zapfen aufweisen. Es ist aber auch umgekehrt möglich, den Kontaktkörper mit einer Bohrung zu versehen, in die ein Ende der Schraubenfeder eingedreht ist. Von besonderem Vorteil ist es, daß ein solcher Kontaktkörper unabhängig von der Wahl des Materials für die Schraubenfeder und des Leiterstückes aus einem Material mit vorgegebenem elektrischen Widerstand hergestellt werden kann. Wie bekannt, sollen bei Büromöbeln aus Gründen der Sicherheit keine niederohmigen Verbindungen zum Fußboden hergestellt werden. Vielmehr werden Widerstände im Megohm-Bereich als optimal angesehen. Auf diese Forderungen kann der Schleifkontakt der erfindungsgemäßen Rolle ohne weiteres durch die Wahl des Materials für den Kontaktkörper eingestellt werden. So kann ein solcher Kontaktgeber insbesondere aus einem mit leitfähigen Stoffen gefüllten Kunststoff bestehen, ohne daß die oben behandelten Nachteile bei der Verwendung eines solchen Kunststoffes auftreten, da der kleine Knopf am Ende der Schraubenfeder praktisch unsichtbar ist und dieser Knopf auch keine nennenswerten Kräfte aufzunehmen braucht.

Die Erfindung wird im folgenden anhand des in der Zeichnung dargestellten Ausführungsbeispieles näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Es zeigen

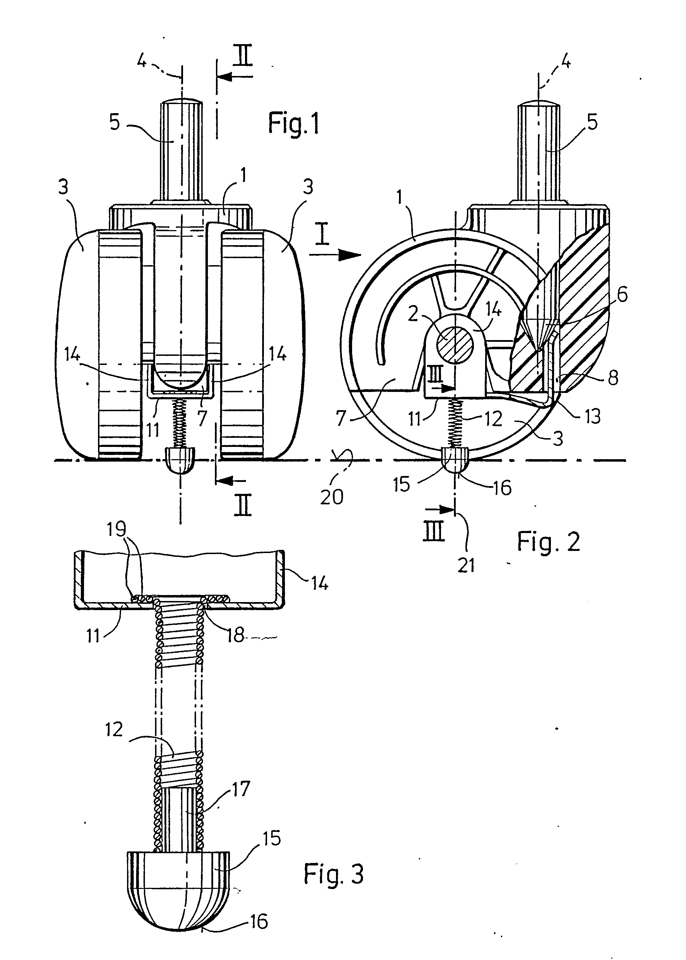

Fig. 1 die Ansicht einer Rolle nach der Erfindung in Richtung des Pfeiles I in Fig. 2,

Fig. 2 einen Schnitt durch die Rolle nach Fig. 1 längs der Linie II-II mit teilweise aufgebrochenem Tragkörper und

Fig. 3 einen Schnitt durch die Schraubenfederanordnung der Rolle nach Fig. 2 längs der Linie III-III in vergrößertem Maßstab.

Die in der Zeichnung dargestellte Rolle weist einen aus Kunststoff bestehenden Tragkörper 1 auf, in dem ein Achszapfen 2 befestigt ist. Auf die aus dem Tragkörper 1 herausragenden Enden des Tragzapfens 2 sind Räder 3 aufgesteckt. In einer zum Achszapfen 2 senkrechte Ebene 4 ist im Abstand vom Achszapfen 2 im Tragkörper 1 ein metallischer Stift 5 drehbar gelagert, der an seinem sich innerhalb des Tragkörpers 1 befindlichen Ende eine im wesentlichen kegelige Fläche 6 aufweist, mit der er sich in der entsprechend geformten Bohrung des Tragkörpers 1 abstützt. Insoweit hat die in der Zeichnung dargestellte Rolle einen üblichen Aufbau.

Es ist häufig erwünscht, zwischen fahrbaren Büromöbeln und dem Boden des Raumes, in dem sich die Möbel befinden, einen elektrisch leitenden Kontakt herzustellen, um die elektrostatische Aufladung der Möbel und der damit in Berührung kommenden Personen zu verhindern. Bei der in der Zeichnung dargestellten Rolle dient der Herstellung einer solchen elektrisch leitenden Verbindung ein Schleifkontakt, der aus einem metallischen Leiterstücke 11 besteht, das einerseits mit einer Schraubenfeder 12 und andererseits mit einem Federarm 13 versehen ist. Das beispielsweise aus Blech bestehende und als Stanzteil hergestellte Leiterstück 11 liegt an der Unterseite des mit dem Achszapfen 2 versehenen Abschnittes des Tragkörpers 1 an und weist an seinen Rändern zwei Lappen 14 auf, die den zentralen Abschnitt 7 des Tragkörpers 1 umgreifen und an den Seitenflächen dieses Abschnittes 7 anliegen. Diese Lappen erstrecken sich bis über den Achszapfen 2 und weisen Bohrungen auf, die von dem Achszapfen 2 durchsetzt werden. Auf diese Weise ist das Leiterstück 11 mit dem Tragkörper 1 ohne irgendwelche zu sätzlichen Maßnahmen formschlüssig und absolut sicher verbunden. Dabei kann die Montage des Leiterstückes 11 mit der Schraubenfeder 12 und dem Federarm 13 beim Einstecken des Achszapfens 2, also erst bei der Endmontage der Rolle, erfolgen. Da es sich bei dem Leiterstück mit der Schraubenfeder 12 und dem Federarm 13 um ein zusätzlich anzubringendes Bauteil handelt, das den übrigen Aufbau der Rolle nicht beeinflußt, kann es auch fortgelassen werden, so daß eine Fertigung ohne weitere Änderung von Rollen mit Schleifkontakt auf Rollen ohne Schleifkontakt umgestellt werden kann und umgekehrt.

Der erwähnte Federarm 13 wird von einem abgewinkelten Abschnitt des Leiterstückes 11 gebildet, der in eine zum Stift 5 gleichgerichtete, jedoch gegenüber dessen Achse versetzte Aussparung 8 des Tragkörpers eingreift und mit seinem Ende an der kegeligen Fläche 6 des Stiftes 5 federnd anliegt. Die blatt-oder zungenartige Ausbildung des Leiterstückes 11 gewährleistet in Verbindung mit der Wahl des Materials für das metallische Leiterstück 11 eine ausreichende Elastizität des Federarmes 13, um einen stets einwandfreien Kontakt zwischen dem Leiterstück 11 und dem Stift 5 zu gewährleisten.

Die Schraubenfeder 12 ist an ihrem dem Achszapfen 2 abgewandten Ende mit einem Kontaktkörper in Form eines Knopfes 15 versehen, der eine abgerundete Stirnfläche 16 und an seiner der Schraubenfeder 12 zugewandten Seite einen Zapfen 17 aufweist, mit welcher er in die Schraubenfeder 12 eingreift. Die elastische Spannung der Schraubenfeder 12 ist ausreichend, um den Knopf 15 mit seinem Stift 17 in der Schraubenfeder 12 ohne weitere Befestigungsmittel sicher zu halten, zumal alle im Sinne eines Herausziehens des Knopfes aus der Schraubenfeder 12 wirkenden Kräfte zugleich ein Verengen der Feder und damit ein verstärktes Festhalten des Knopfes bewirken. Am anderen Ende ist die Schraubenfeder 12 einfach in eine Bohrung 18 des Leiterstückes 11 eingesetzt und darin durch einige abgeplattete und vergrößerte Windungen 19 gehalten. Die Länge der Schraubenfeder 12 ist so bemessen, daß der Knopf 15 mit seiner Stirnfläche 16 über die die Räder 3 tangierende Ebene 20 übersteht, die zur Achse 4 des Stiftes 5 senkrecht steht. Weiterhin ist die Schraubenfeder 12 so angeordnet, daß ihre Achse 21 die Achse des Achszapfens 2 schneidet. Durch diese Anordnung ist gewährleistet, daß der Knopf 15 am Ende der Schraubenfeder 12 nach entsprechender Auslenkung der Schraubenfeder stets mit dem durch die Ebene 20 symbolisierten Boden eines Raumes in Kontakt gehalten wird und dadurch eine elektrisch leitende Verbindung vom Boden über das Leiterstück 11 mit seinem Federarm 13 zum Stift 5 herstellt, mit dem die Rolle in einem Möbelstück, beispielsweise dem Fußteil eines Bürostuhles, befestigt ist. Dabei kann durch Wahl des Materials für den Knopf 15 der Leitwert der Verbindung zwischen Möbel und Boden auf ein optimales Maß eingestellt werden. Die Anordnung der Schraubenfeder 12 auf einer den Achszapfen 2 schneidenden Achse 21 hat den Vorteil, daß die Schraubenfeder 12 auf der Schwenkachse der Rolle gegenüber dem Boden ausgerichtet ist und daher bei Schwenkbewegungen der Rolle gegenüber dem Boden einen nur minimalen Weg auszuführen braucht.

Obwohl das dargestellte Ausführungsbeispiel eine Rolle mit zwei Rädern zeigt, versteht es sich, daß die Erfindung auch bei Rollen mit nur einem Rad Anwendung finden kann. Weiterhin versteht es sich, daß es viele andere Möglichkeiten der Befestigung der Schraubenfeder am Tragkörper und der Herstellung einer leitenden Verbindung zu dem zur Befestigung der Rolle dienenden Stift gibt. So wäre es beispielsweise denkbar, die Schraubenfeder unmittelbar in Verlängerung des Stiftes anzuordnen und ggf. sogar unmittelbar am Ende des Stiftes zu befestigen. Demgemäß gibt es eine Vielzahl von Ausführungsformen, die von dem dargestellten Ausführungsbeispiel abweichen, ohne den durch die Schutzansprüche gesteckten Rahmen der Erfindung zu verlassen.

**Ansprüche**

1. Rolle, insbesondere für Büromöbel, mit einem aus Kunststoff bestehenden Tragkörper, einem im Tragkörper befestigten Achszapfen, mindestens einem auf dem Achszapfen gelagerten Rad, einem im Tragkörper drehbar gelagerten, metallischen Stift, der in einer zum Achszapfen senkrechten Ebene zum Achszapfen versetzt angeordnet ist, und mit einem mit dem Stift elektrisch leitend verbundenen Schleifkontakt, der einen über die zum Stift senkrechte, das mindestens eine Rad tangierende Ebene überstehenden, federnden Abschnitt aufweist,
dadurch gekennzeichnet,
daß der federnde Abschnitt des Schleifkontaktes von einer zur Tangentialebene (20) im wesentlichen senkrecht stehenden Schraubenfeder (12) gebildet wird, die an ihrem freien Ende mit einem über die Tangentialebene (20) überstehenden Kontaktkörper (15) versehen ist.

2. Rolle nach Anspruch 1, dadurch gekennzeichnet, daß die Achse (21) der Schraubenfeder (12) die Achse des das wenigstens eine Rad (3) tragenden Achszapfens (2) wenigstens annähernd - schneidet.

3. Rolle nach Anspruch 1 oder 2, dadurch gekennzeichnet, daß die Schraubenfeder (12) am Ende eines metallischen Leiterstückes (11) angebracht ist, das am Tragkörper (1) befestigt ist und einen zur Tangentialebene (20) parallelen Abschnitt sowie einen Federarm (13) aufweist, der in eine Aussparung (8) des Tragkörpers (1) eingreift und mit seinem Ende an einer Fläche (6) des Stiftes (5) anliegt.

4. Rolle nach Anspruch 3, dadurch gekennzeichnet; daß der Stift (5) an seinem sich innerhalb des Tragkörpers (1) befindenden Ende eine wenigstens annähernd kegelige Fläche (6) aufweist und das Ende des Federarmes (13) an dieser kegeligen Fläche anliegt.

5. Rolle nach einem der vorhergehenden Ansprüche mit zwei zu beiden Seiten eines zentralen Abschnittes des Tragkörpers angeordneten Rädern, dadurch gekennzeichnet, daß die Schraubenfeder (12) zwischen den Rädern (3) angeordnet ist.

6. Rolle nach den Ansprüchen 3 und 5, dadurch gekennzeichnet, daß das Leiterstück (11) an seinen Rändern an Seitenflächen des zentralen Abschnittes (7) des Tragkörpers (1) anliegende Lappen (14) aufweist, die mit von den Achszapfen (2) durchsetzten Bohrungen versehen sind.

7. Rolle nach einem der vorhergehenden Ansprüche, dadurch gekennzeichnet, daß der Kontaktkörper (15) ein zur Schraubenfeder konzentrischer Knopf mit abgerundeter Stirnfläche (16) ist.

8. Rolle nach einem der vorhergehenden Ansprüche, dadurch gekennzeichnet, daß der Kontaktkörper (15) aus einem Material mit vorgegebenem elektrischen Widerstand, insbesondere aus einem mit leitfähigen Stoffen gefülltem Kunststoff, besteht.

0 238 931

Fig.1

Fig. 2

Fig. 3